# EUROPEAN PATENT APPLICATION

(11) **EP 1 705 634 A1**
(43) Date of publication of application: **27.09.2006**
(21) Application number: 04818934.4
(22) Date of filing: 17.11.2004
(51) Int. Cl.: G09G 3/36, G02F 1/133

(54) **METHOD AND DEVICE FOR COMPENSATING CHANGE OF LIQUID CRYSTAL DISPLAY DEVICE BY LAPSE OF YEARS, COMPUTER PROGRAM, AND LIQUID CRYSTAL DISPLAY DEVICE**

(30) Priority: 19.11.2003 JP 2003389899
(71) Applicant: EIZO NANAO CORPORATION, Hakusan-shi Ishikawa 924-8566 (JP)
(72) Inventor: SAKUDA, Junji, c/o EIZO NANAO CORPORATION, Hakusan-shi, Ishikawa,924-8566 (JP)
(74) Representative: de Beaumont, Michel
(86) International application number: PCT/JP2004/017101
(87) International publication number: WO 2005/050613

(57) **Abstract**

A liquid crystal display device includes a liquid crystal display panel which is driven by liquid crystal drive output signals according to input image input signals Sin respectively corresponding to plural colors and displays a desired display image Lim, a backlight unit as a light source for transmitted light (display image Lim) from the liquid crystal display panel, a microcomputer which executes various kinds of control and processing(arithmetic operations, driving, etc.), a liquid crystal drive circuit, a backlight drive circuit, and luminance sensors (white luminance sensor, red luminance sensor, green luminance sensor and blue luminance sensor). An aging-originated change (aging change) in the display characteristics of the liquid crystal display device is automatically compensated for.

## Description

### TECHNICAL FIELD

The present invention relates to a compensation method, a compensation apparatus and a computer program which compensate for an aging change in the display characteristics of a liquid crystal display device, and to a liquid crystal display device which compensates for an aging change.

### BACKGROUND ART

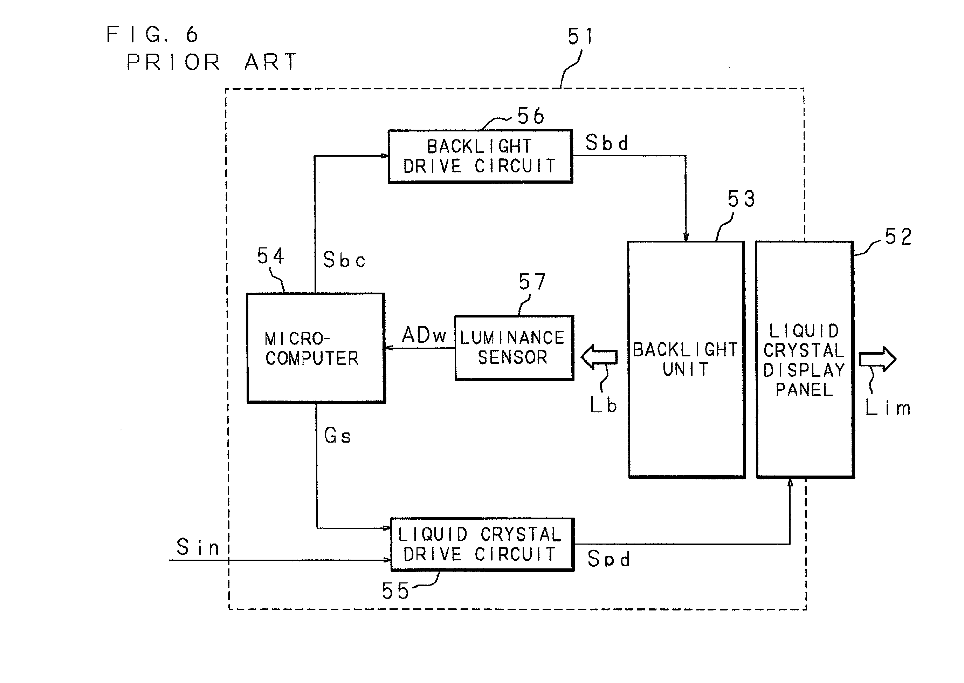

FIG. 6 is a block diagram of schematic circuit blocks of a liquid crystal display device for explaining a light modulation method in a conventional liquid crystal display device. In the diagram, a liquid crystal display device (hereinafter occasionally referred to as a "LCD device") 51 includes a liquid crystal display panel (hereinafter occasionally referred to as a "LCD panel") 52 which is driven by liquid crystal drive output Signals Spd according to image input signals Sin respectively corresponding to plural colors (normally, red (hereinafter sometimes referred to as "R"), green (hereinafter sometimes referred to as "G") and blue (hereinafter sometimes referred to as "B") as three primary colors), and displays a desired display image Lim, a backlight unit 53 as a light source for transmitted light (display image Lim) from the LCD panel 52, a microcomputer 54 which executes various kinds of control (arithmetic operations and driving), a liquid crystal drive circuit 55, a backlight drive circuit 56, and a luminance sensor (white luminance sensor) 57.

Color display of the LCD device 51 is achieved by providing R, G and B color filters (not shown) in association with the individual dots of the LCD panel 52, controlling the transmittance of the light (backlight) from the backlight unit 53 stepwise with the shutter function of the LCD panel 52, and causing the light from the backlight unit 53 modulated by the shutter function to pass through the color filters.

Light modulation (adjustment of the amount of light emission (luminance)) of the backlight unit 53 of the LCD device 51 is carried out as follows. The luminance sensor 57 is provided at a position where backlight Lb from the backlight unit 53 can be measured, and a detected value ADw from the luminance sensor 57 is inputted to the microcomputer 54. The luminance sensor 57 photoelectrically converts the backlight Lb with an analog amount to an electrical signal with an analog amount, further performs A/D conversion of the electrical signal and inputs a resultant detected value ADw as a digital value to the microcomputer 54. The microcomputer 54 sends a light modulation signal Sbc for controlling the backlight unit 53 based on the detected value ADw to the backlight drive circuit 56. The backlight drive circuit 56 sends a backlight drive signal Sbd according to the light modulation signal Sbc to the backlight unit 53 to control the amount of light emission (luminance) of the backlight unit 53.

Color adjustment of the LCD device 51 is carried out as follows. A user of the LCD device 51 (or an adjuster in the manufacturing process in a factory) adjusts (sets) gain values Gs for R, G and B (gain value Gsr for R, gain value Gsg for G and gain value Gsb for B) using an on-screen display (OSD) or so. Based on the result of the adjustment (setting), the microcomputer 54 sends the gain values Gs (Gsr, Gsg and Gsb) to the liquid crystal drive circuit 55. The liquid crystal drive circuit 55 converts the image input signals Sin to the liquid crystal drive output signals Spd based on the gain values Gs, and outputs the liquid crystal drive output signals Spd to drive the LCD panel 52. A color-adjusted (luminance-adjusted) display image Lim can be displayed by controlling the transmittance of the light from the backlight unit 53 on the LCD panel 52 for each of R, G and B according to the liquid crystal drive output signals Spd converted based on the gain values Gs.

Display characteristics of the display image Lim to be displayed on the conventional LCD panel 52, particularly, color display characteristics (luminous color characteristics) vary due to aging of the backlight unit 53 (degradation of the luminous characteristics, fluctuation in luminous color), and discoloration (yellowing) of a light guide plate (not shown), a polarizer (not shown) or the like caused by ultraviolet rays from the backlight unit 53. To correct fluctuation (discoloration) of the luminous colors, therefore, the user of the LCD device 51 should manually adjust the gain value Gs for each of the R, G and B colors again by visual observation or by using luminance sensors (not shown) located outside the LCD panel 52.

As a known LCD device which compensates for aging of the LCD device, there is an LCD device which has three kinds of backlight units of different luminous colors, and three types of photosensors, and operates in such a way that the white balance of an image to be displayed on the LCD panel is always equal to a set value regardless of temperature change and aging of the backlight units (see, for example, Patent Document 1).
[Patent Document 1] Japanese Patent Application Laid-Open No.H11-295689(1999)

### DISCLOSURE OF THE INVENTION

As mentioned above, manual adjustment by a user is the only one way to compensate for an aging change in the display characteristics of the conventional LCD device, and compensation for an aging change in the display characteristics of the LCD device is troublesome, has many difficulties, and is not therefore practical.

Accordingly, the present invention has been made to cope with the problem and aims at providing an aging compensation method and an aging compensation apparatus for a liquid crystal display device, which can automatically compensate for an aging-oriented change (aging change) in the display characteristics of the liquid crystal display device, a computer program for allowing a computer to execute the aging compensation method, and a liquid crystal display device on which the aging compensation method can be performed.

According to the invention, there is provided an aging compensation method for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising a first process in which at two different points of time, a backlight luminance and a luminance of at least one color in the plural colors contained in the backlight are measured; a second process in which a rate of change in color luminance component for the at least one color is acquired from the luminance values measured at the two different points of time; a third process in which a gain correction coefficient for the at least one color for correcting the gain value is acquired from the rate of change in color luminance component; and a fourth process in which the liquid crystal drive output signal for the at least one color is generated by using a corrected gain value acquired by correcting the gain value with the gain correction coefficient. And, a ratio of the luminance of the at least one color to the backlight luminance is acquired at the different points of time as a first color luminance component ratio and a second color luminance component ratio, and the rate of change in color luminance component is acquired from a difference between the first color luminance component ratio and the second color luminance component ratio.

The aging compensation method according to the invention may further comprise a fifth process in which a rate of change in transmitted light luminance is acquired from the rate of change in color luminance component and a contribution factor of a color contained in the backlight having transmitted through the liquid crystal display panel to the backlight luminance; a sixth process in which a target luminance of the backlight is acquired from the rate of change in transmitted light luminance; and a seventh process in which a backlight drive signal is controlled in such a way that the backlight luminance becomes the target luminance. And, the rate of change in transmitted light luminance is acquired by multiplying the rate of change in color luminance component by the contribution factor of a color contained in the backlight having transmitted through the liquid crystal display panel to the backlight luminance.

According to the invention, there is provided an aging compensation method for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising a first process in which at two different points of time, a luminance of the backlight and a luminance of each of the plural colors contained in the backlight are measured; a second process in which a rate of change in color luminance component for each of the plural colors is acquired from the luminance values measured at the two different points of time; a third process in which a gain correction coefficient for each of the plural colors for correcting the gain value is acquired from the rate of change in color luminance component; and a fourth process in which the liquid crystal drive output signal for each of the plural colors is generated by using a corrected gain value acquired by correcting the gain value with the gain correction coefficient. And, a ratio of the luminance of each of the plural colors to the backlight luminance is acquired at the different points of time as a first color luminance component ratio and a second color luminance component ratio, and the rate of change in color luminance component is acquired from a difference between the first color luminance component ratio and the second color luminance component ratio for each of the plural colors.

In the aging compensation method according to the invention, the rate of change in color luminance component may be computed by dividing the difference between the first color luminance component ratio and the second color luminance component ratio by the first color luminance component ratio.

In the aging compensation method according to the invention, the gain value may be corrected by multiplying the gain value by the gain correction coefficient.

The aging compensation method according to the invention may further comprise a fifth process in which a rate of change in transmitted light luminance is acquired from the rate of change in color luminance component and a contribution factor of a color contained in the backlight having transmitted through the liquid crystal display panel to the backlight luminance for each of the plural colors; a sixth process in which a target luminance of the backlight is acquired from the rate of change in transmitted light luminance; and a seventh process in which a backlight drive signal is controlled in such a way that the backlight luminance becomes the target luminance. And, a rate of change in color luminance is acquired by multiplying the rate of change in color luminance component by the contribution factor of a color contained in the backlight having transmitted through the liquid crystal display panel to the backlight luminance for each of the plural colors, and the rate of change in transmitted light luminance is acquired from a sum of those rates of change in color luminance.

In this aging compensation method, the contribution factor can be set.

According to the invention, there is provided an aging compensation method for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising a first process in which at two different points of time, a backlight luminance and a luminance of one color selected from the plural colors contained in the backlight are measured; a second process in which a rate of change in color luminance component for the one color is acquired from the luminance values measured at the two different points of time; a third process in which a rate of change in color luminance component for each of the other colors in the plural colors is acquired by applying a rate acquired beforehand to the rate of change in color luminance component for the one color; a fourth process in which a gain correction coefficient for each of the other colors than the one color for correcting the gain value is acquired from the rate of change in color luminance component; and a fifth process in which the liquid crystal drive output signal for each of the other colors than the one color is generated by using a corrected gain value acquired by correcting the gain value with the gain correction coefficient. And, a ratio of the luminance of the one color to the backlight luminance is acquired at the different points of time as a first color luminance component ratio and a second color luminance component ratio, and the rate of change in color luminance component for the one color is acquired from a difference between the first color luminance component ratio and the second color luminance component ratio.

In the aging compensation method according to the invention, the rate of change in color luminance component for the one color may be computed by dividing the difference between the first color luminance component ratio and the second color luminance component ratio by the first color luminance component ratio.

In the aging compensation method according to the invention, the one color may have a greatest aging change among the plural colors.

In the aging compensation method according to the invention, the rate of change in color luminance component may be computed by multiplying the rate of change in color luminance component for the one color by the rate acquired beforehand.

In the aging compensation method according to the invention, the gain value may be corrected by multiplying the gain value by the gain correction coefficient.

The aging compensation method according to the invention may further comprise a sixth process in which a rate of change in transmitted light luminance is acquired from the rate of change in color luminance component and a contribution factor of a color contained in the backlight having transmitted through the liquid crystal display panel to the backlight luminance for each of the other colors than the one color; a seventh process in which a target luminance of the backlight is acquired from the rate of change in transmitted light luminance; and an eighth process in which a backlight drive signal is controlled in such a way that the backlight luminance becomes the target luminance. And, a rate of change in color luminance is acquired by multiplying the rate of change in color luminance component by the contribution factor of a color contained in the backlight having transmitted through the liquid crystal display panel to the backlight luminance for each of the other colors than the one color, and the rate of change in transmitted light luminance is acquired from a sum of those rates of change in color luminance.

In the aging compensation method according to the invention, the contribution factor can be set.

According to the invention, there is provided an aging compensation apparatus for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising a luminance sensor which measures a backlight luminance; a color luminance sensor which measures a luminance of at least one color in the plural colors contained in the backlight; first arithmetic operation means for acquiring a rate of change in color luminance component for the at least one color from the luminance values measured at two different points of time and acquiring a gain correction coefficient for at least one color for correcting the gain value from the rate of change in color luminance component; and liquid crystal drive means for generating the liquid crystal drive output signal for the at least one color by using a corrected gain value acquired by correcting the gain value with the gain correction coefficient. And, a ratio of the luminance of the at least one color to the backlight luminance is acquired as a color luminance component ratio from the backlight luminance and the luminance of the at least one color, and the rate of change in color luminance component is acquired from a difference between a first color luminance component ratio at a first point of time and a second color luminance component ratio at a second point of time later than the first point of time.

The aging compensation apparatus according to the invention may further comprise second arithmetic operation means for acquiring a rate of change in transmitted light luminance from the rate of change in color luminance component and a contribution factor of a color contained in the backlight having transmitted through the liquid crystal display panel to the backlight luminance, and acquiring a target luminance of the backlight from the rate of change in transmitted light luminance; and backlight drive means for controlling a backlight drive signal in such a way that the backlight luminance becomes the target luminance. And, the rate of change in transmitted light luminance is acquired by multiplying the rate of change in color luminance component by the contribution factor of a color contained in the backlight having transmitted through the liquid crystal display panel to the backlight luminance.

According to the invention, there is provided a computer program for allowing a computer to execute compensation for aging of a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising a first process in which at two different points of time, the computer is allowed to measure a backlight luminance and a luminance of at least one color in the plural colors contained in the backlight; a second process in which the computer is allowed to acquire a rate of change in color luminance component for the at least one color from the luminance values measured at the two different points of time; a third process in which the computer is allowed to acquire a gain correction coefficient for the at least one color for correcting the gain value from the rate of change in color luminance component; and a fourth process in which the computer is allowed to generate the liquid crystal drive output signal for the at least one color by using a corrected gain value acquired by correcting the gain value with the gain correction coefficient. And, a ratio of the luminance of the at least one color to the backlight luminance is acquired at the different points of time as a first color luminance component ratio and a second color luminance component ratio, and the rate of change in color luminance component is acquired from a difference between the first color luminance component ratio and the second color luminance component ratio.

The computer program according to the invention may further comprise a fifth process in which the computer is allowed to acquire a rate of change in transmitted light luminance from the rate of change in color luminance component and a contribution factor of a color contained in the backlight having transmitted through the liquid crystal display panel to the backlight luminance; a sixth process in which the computer is allowed to acquire a target luminance of the backlight from the rate of change in transmitted light luminance; and a seventh process in which the computer is allowed to control a backlight drive signal in such a way that the backlight luminance becomes the target luminance. And, the rate of change in transmitted light luminance is acquired by multiplying the rate of change in color luminance component by the contribution factor of a color contained in the backlight having transmitted through the liquid crystal display panel to the backlight luminance.

According to the invention, there is provided a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising a luminance sensor which measures a backlight luminance; a color luminance sensor which measures a luminance of at least one color in the plural colors contained in the backlight; first arithmetic operation means for acquiring a rate of change in color luminance component for the at least one color from the luminance values measured at two different points of time and acquiring a gain correction coefficient for the at least one color for correcting the gain value from the rate of change in color luminance component; and liquid crystal drive means for generating the liquid crystal drive output signal for the at least one color by using a corrected gain value acquired by correcting the gain value with the gain correction coefficient. And, a ratio of the luminance of the at least one color to the backlight luminance is acquired as a color luminance component ratio from the backlight luminance and the luminance of the at least one color, and the rate of change in color luminance component is acquired from a difference between a first color luminance component ratio at a first point of time and a second color luminance component ratio at a second point of time later than the first point of time.

The liquid crystal display device according to the invention may further comprise second arithmetic operation means for acquiring a rate of change in transmitted light luminance from the rate of change in color luminance component and a contribution factor of a color contained in the backlight having transmitted through the liquid crystal display panel to the backlight luminance, and acquiring a target luminance of the backlight from the rate of change in transmitted light luminance; and backlight drive means for controlling a backlight drive signal in such a way that the backlight luminance becomes the target luminance. And, the rate of change in transmitted light luminance is acquired by multiplying the rate of change in color luminance component by the contribution factor of a color contained in the backlight having transmitted through the liquid crystal display panel to the backlight luminance.

In the aging compensation method for liquid crystal display device, the aging compensation apparatus for liquid crystal display device, the computer program, and the liquid crystal display device according to the invention, at different points of time, the backlight (white light) luminance and the luminance of at least one color in plural colors (R, G and B) contained in the backlight are measured, a rate of change in color luminance component for the at least one color is acquired from the luminance values measured at the different points of time, a gain correction coefficient for the at least one color for correcting the gain value is acquired using the rate of change in color luminance component, and the liquid crystal drive output signal for the at least one color is generated by using a corrected gain value acquired by correcting the gain value with the gain correction coefficient. Therefore, even when the relative ratio of R, G and B in the backlight fluctuates (aging change), the relative ratio of R, G and B or the white balance can be returned to the initial level.

In the aging compensation method for liquid crystal display device, the aging compensation apparatus for liquid crystal display device, the computer program, and the liquid crystal display device according to the invention, a rate of change in transmitted light luminance is acquired from the rate of change in color luminance component and a contribution factor of colors (color components corresponding to plural colors) contained in the backlight (transmitted light) having transmitted through the liquid crystal display panel to the backlight luminance, a target luminance of the backlight is acquired from the rate of change in transmitted light luminance, and driving of the backlight is controlled based on the target luminance, so that an aging change in luminance can be compensated for.

According to the invention, at different points of time, the backlight (white light luminance) and the luminance of at least one color in plural colors (R, G and B) contained in the backlight are measured, a rate of change in color luminance component for the at least one color is acquired from the luminance values measured at the different points of time, a gain correction coefficient for the at least one color for correcting the gain value is acquired using the rate of change in color luminance component, and the liquid crystal drive output signal for the at least one color is generated by using a corrected gain value acquired by correcting the gain value with the gain correction coefficient. Therefore, it is possible to provide an aging compensation method for liquid crystal display device, an aging compensation apparatus for liquid crystal display device, a computer program, and a liquid crystal display device, wherein the relative ratio of R, G and B or the white balance can be returned to the initial level, even when the relative ratio of R, G and B in the backlight fluctuates (aging change).

According to the invention, a rate of change in transmitted light luminance is acquired from the rate of change in color luminance component and a contribution factor of colors contained in the backlight having transmitted through the liquid crystal display panel to the backlight luminance, a target luminance of the backlight is acquired from the rate of change in transmitted light luminance, and driving of the backlight is controlled based on the target luminance. Therefore, it is possible to provide an aging compensation method for liquid crystal display device, an aging compensation apparatus for liquid crystal display device, a computer program, and a liquid crystal display device, wherein an aging change in the backlight luminance can be compensated for.

### BRIEF DESCRIPTION OF THE DRAWINGS

FIG. 1 is a block diagram of schematic circuit blocks of a liquid crystal display device for explaining a light modulation method in a liquid crystal display device according to a first embodiment of the invention;
FIG. 2 is a flowchart illustrating processes of an aging compensation method for the liquid crystal display device according to the first embodiment of the invention;
FIG. 3 is a graph showing aging changes in luminance of the individual color components of a backlight set similar to the one to be used in a liquid crystal display device according to a second embodiment of the invention;
FIG. 4 is a block diagram of schematic circuit blocks of a liquid crystal display device for explaining a light modulation method in the liquid crystal display device according to the second embodiment of the invention;
FIG. 5 is a flowchart illustrating processes of an aging compensation method for the liquid crystal display device according to the second embodiment of the invention; and
FIG. 6 is a block diagram of schematic circuit blocks of a liquid crystal display device for explaining a light modulation method in a conventional liquid crystal display device.

### EXPLANATION OF REFERENCE NUMERALS

- 1: Liquid crystal display device
- 2: Liquid crystal display panel
- 3: Backlight unit
- 4: Microcomputer (first arithmetic operation means, second arithmetic operation means)
- 5: Liquid crystal drive circuit (liquid crystal drive means)
- 6: Backlight drive circuit (backlight drive means)
- 7: Luminance sensor
- 7w: White luminance sensor
- 7r: Red luminance sensor
- 7s: Green luminance sensor
- 7b: Blue luminance sensor
- ADw, ADr, ADg, ADb: Detected value
- Cc: Gain correction coefficient
- Gc: Corrected gain value
- Gs: Gain value
- Lb: Backlight
- Lim: Display image
- Sbc: Light modulation signal
- Sbd: Backlight drive signal
- Spd: Liquid crystal drive output signal
- Sin: Image input signal

### BEST MODE FOR IMPLEMENTING THE INVENTION

Preferred embodiments of the invention will be described below with reference to the accompanying drawings.

### (First Embodiment)

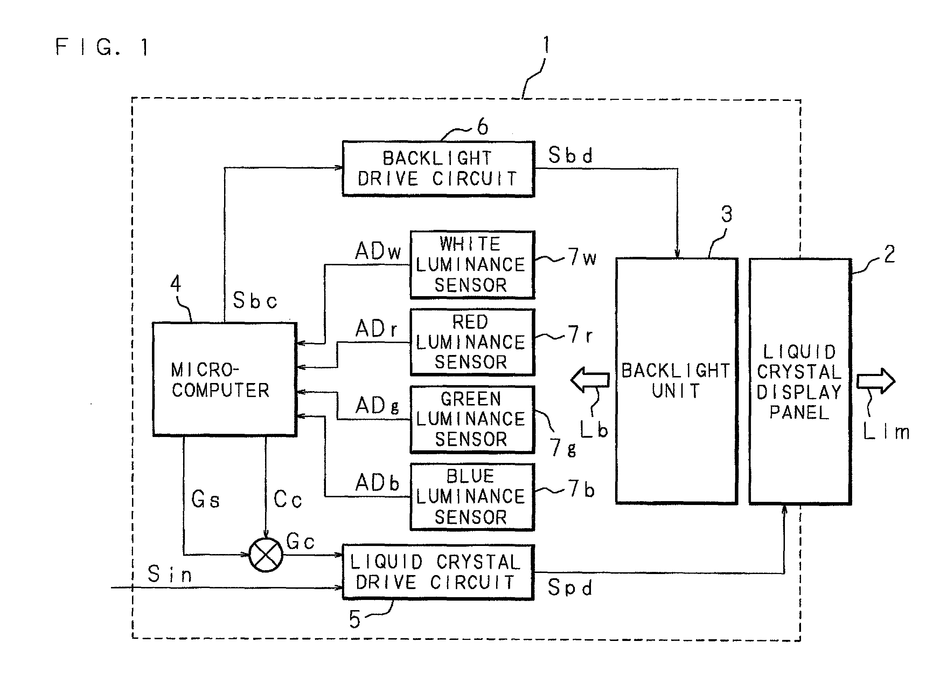

FIG. 1 is a block diagram of schematic circuit blocks of a liquid crystal display device for explaining a light modulation method in a liquid crystal display device according to the first embodiment of the invention. In the diagram, a liquid crystal display (LCD) device 1 includes a liquid crystal display (LCD) panel 2 which is driven by liquid crystal drive output signals Spd (liquid crystal drive output signal Spr for R, liquid crystal drive output signal Spg for G and liquid crystal drive output signal Spb for B) according to image input signals Sin (image input signal Sir for R, image input signal Sig for G and image input signal Sib for B) respectively corresponding to plural colors (normally, red (R), green (G) and blue (B) as three primary colors), and displays a desired display image Lim, a backlight unit 3 (backlight source) as a light source for transmitted light (display image Lim) from the LCD panel 2, a microcomputer 4 which executes various kinds of control and processing(arithmetic operations, driving, etc.), a liquid crystal drive circuit 5, a backlight drive circuit 6, and luminance sensors (white luminance sensor 7w, and red luminance sensor 7r, green luminance sensor 7g and blue luminance sensor 7b respectively corresponding to the plural colors (R, G and B); those luminance sensors may sometimes be referred to as "luminance sensor 7"). The white luminance sensor 7w can be said to be a backlight luminance sensor. While this sensor will be explained as the white luminance sensor 7w for the sake of simplicity, it is not limited to white light, and slight discoloration is of course inclusive. In general, a cathode ray tube is used for the backlight unit 3 which emits so-called white light (backlight). The cathode ray tube has a characteristic such that its luminance decreases with time (years) after a predetermined initial time lapses.

The microcomputer 4, which is itself known, includes a central processing unit (CPU) which performs various kinds of controls and processing including arithmetic operations, and driving, a ROM which is connected to the CPU via a bus and stores an operation program, a RAM which temporarily stores data in operation, and a non-volatile memory which stores predetermined numerical values, such as constants. With a computer program according to the invention, which will be discussed later, stored in the ROM, various arithmetic operations can be executed by the CPU. That is, the microcomputer 4 serves as means for achieving functions, such as arithmetic operations and generation of various signals (arithmetic operation means, storage means for storing operation results, control signal generation means for generating control signals based on the operation results, etc.). The computer program can be written from an external storage device (not shown), such as a CD-ROM.

Color display of the LCD device 1 is achieved by providing R, G and B color filters (not shown) in association with the individual dots of the LCD panel 2, controlling the transmittance of the light (backlight) from the backlight unit 3 stepwise with the shutter function of the LCD panel 2, and causing the light from the backlight unit 3 modulated by the shutter function to pass through the color filters so as to be visible as the display image Lim.

Light modulation (adjustment of the amount of light emission (luminance)) of the backlight unit 3 of the LCD device 1 is carried out as follows. The white luminance sensor 7w is provided at a position where backlight Lb from the backlight unit 3 can be measured, and a detected value ADw from the white luminance sensor 7w is inputted to the microcomputer 4. The white luminance sensor 7w photoelectrically converts the backlight Lb with an analog amount to an electrical signal of an analog value, further performs A/D conversion of the electrical signal and inputs a resultant detected value ADw as a digital value to the microcomputer 4. The detected value ADw may be inputted as an analog value to the microcomputer 4 and be subjected to A/D conversion inside the microcomputer 4. The amount of light emission to be measured need not be an absolute value, but should be a relative value with respect to an arbitrary reference value adequately set (e.g., a predetermined luminance at a given color temperature measured by an external sensor at the time of adjustment in a factory).

The microcomputer 4 sends a light modulation signal Sbc for controlling the backlight unit 3 based on the detected value ADw to the backlight drive circuit 6. The backlight drive circuit 6, which is comprised of, for example, an inverter circuit, can send a backlight drive signal Sbd according to the light modulation signal Sbc to the backlight unit 3 to control the amount of light emission (luminance) of the backlight unit 3 over a wide range. It is needless to say that in controlling the amount of light emission of the backlight unit 3, a detected value ADr, ADg or ADb from the red luminance sensor 7r, the green luminance sensor 7g or the blue luminance sensor 7b other than the white luminance sensor 7w can be used as needed.

In principle, color adjustment of the LCD device 1 is carried out as follows. A user of the LCD device 1 (or an adjuster in the manufacturing process in a factory) adjusts (sets) gain values Gs for R, G and B (gain value Gsr for R, gain value Gsg for G and gain value Gsb for B) using an on-screen display (OSD) or so. Based on the result of the adjustment (setting), the microcomputer 4 outputs the gain values Gs (Gsr, Gsg and Gsb). The gain values Gs are computed (e.g., by multiplication) in addition to gradation conversion for image input signals to correct the display characteristics (luminous characteristics such as gamma characteristics) corresponding to each of the plural colors when the image input signals Sin inputted to the LCD device 1 is converted to the liquid crystal drive output signals Spd.

In the first embodiment, gain correction coefficients Cc for correcting the set gain values Gs (gain correction coefficient Cr for R, gain correction coefficient Cg for G and gain correction coefficient Cb for B) are generated by the microcomputer 4. Corrected gain values Gc (corrected gain value Gcr for R, corrected gain value Gcg for G and corrected gain value Gcb for B) are acquired by multiplying the gain values Gs (Gsr, Gsg and Gsb) by the gain correction coefficients Cc (Cr, Cg and Cb), and are inputted to the liquid crystal drive circuit 5. While the multiplication may be carried out using an exclusive multiplier, a program-based arithmetic operation is feasible. Further, the structure may be modified in such a way that the multiplication can be done by either the microcomputer 4 or the liquid crystal drive circuit 5.

The liquid crystal drive circuit 5 drives the LCD panel 2 by converting the image input signals Sin to the liquid crystal drive output signals Spd based on the corrected gain values Gc acquired by correcting the gain values Gs with the gain correction coefficients Cc, and outputting the liquid crystal drive output signals Spd. A color-adjusted (luminance-adjusted) display image Lim can be displayed by controlling the transmittance of the light from the backlight unit 3 at the LCD panel 2 for each of R, G and B with the liquid crystal drive output signals Spd (liquid crystal drive output signal Spr for R, liquid crystal drive output signal Spg for G and liquid crystal drive output signal Spb for B) converted based on the corrected gain values Gc.

According to the first embodiment, the color luminance sensors (red luminance sensor 7r, green luminance sensor 7g and blue luminance sensor 7b) are used as the luminance sensor 7 in addition to the white luminance sensor 7w (corresponding to the luminance sensor 57 of the conventional LCD device shown in FIG. 6). The white luminance sensor 7w detects the luminance of backlight generated from the backlight unit 3. The color luminance sensors (7r, 7g and 7b) detect predetermined colors contained in the backlight Lb (plural colors contained in the image input signals Sin, i.e., R, G and B). Although detection of colors (visible lights) cannot be defined simply, colors can be detected by color luminance sensors constructed by combining a luminance sensor whose structure is similar to the structure of the white luminance sensor 7w with adequate color filters having given wavelength bands.

That is, when the image input signals Sin are constructed for the three primary colors of R, G and B, color luminance sensors for R, G and B are provided. In this example, the image input signals Sin are constructed for the three primary colors of R, G and B, the red luminance sensor 7r is so designed as to extract the red component from the backlight Lb and detect the luminance of the red color, the green luminance sensor 7g is so designed as to extract the green component from the backlight Lb and detect the luminance of the green color, and the blue luminance sensor 7b is so designed as to extract the blue component from the backlight Lb and detect the luminance of the blue color. ADw is the value of the backlight luminance Lb detected by the white luminance sensor 7w, ADr is the value of the luminance of the R light (red component) contained in the backlight Lb detected by the red luminance sensor 7r, ADg is the value of the luminance of the G light (green component) contained in the backlight Lb detected by the green luminance sensor 7g, and ADb is the value of the luminance of the B light (blue component) contained in the backlight Lb detected by the blue luminance sensor 7b.

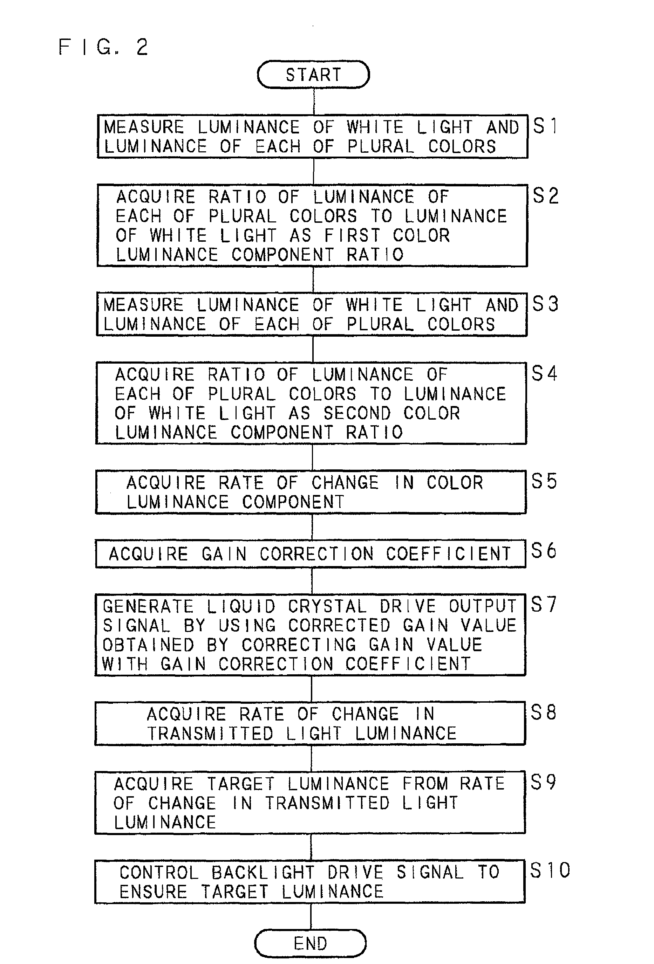

FIG. 2 is a flowchart illustrating processes of an aging compensation method for the liquid crystal display device according to the first embodiment of the invention. The LCD device is the one illustrated in FIG. 1 and FIG. 2 will be explained by using terms and reference symbols shown in FIG. 1. A computer program which executes the aging compensation method employs an OSD system and displays a predetermined window on the screen so that an adjuster or user can input necessary data (instructions). Basically, the mode is set in such a way that once an instruction to activate the computer program is given, the aging compensation method is executed according to the computer program.

Step 1 (S1): At the first point of time (which will be explained as, for example, the adjustment process in a factory but is no way restrictive), a luminance of white light (backlight Lb) and a luminance of each of the plural colors are measured using the white luminance sensor 7w, the red luminance sensor 7r, the green luminance sensor 7g and the blue luminance sensor 7b. The measuring results or acquired detected values are inputted to the microcomputer 4 and are stored as data and subjected to arithmetic operations as needed. The value detected by the white luminance sensor 7w, the value detected by the red luminance sensor 7r, the value detected by the green luminance sensor 7g and the value detected by the blue luminance sensor 7b are respectively denoted by ADwf, ADrf, ADgf and ADbf with "f" suffixed to indicate that the values are measurements taken at the first point of time.

Step 2 (S2): A ratio of the luminance of each of the plural colors to the luminance of white light is acquired as a first color luminance component ratio by using the luminance of white light and the luminance of each of the plural colors both acquired at S1. That is, as the luminance is substituted by the detected value, the first color luminance component ratio Af (the suffix "f" indicating the value having been detected at the first point of time) is acquired from the following equation. The first color luminance component ratio Af for R is acquired as a first red luminance component ratio Afr = ADrf/ADwf, the first color luminance component ratio Af for G is acquired as a first green luminance component ratio Afg = ADgf/ADwf, and the first color luminance component ratio Af for B is acquired as a first blue luminance component ratio Afb = ADbf/ADwf. This calculation is adequately executed by the microcomputer 4 as the first arithmetic operation means.

Step 3 (S3): At the second point of time later than the first point of time (whenever is fine if only the second point of time is different from the first one, for example, half a year after user's purchase of the LCD device), the luminance of white light and luminance of each of the plural colors are measured using the white luminance sensor 7w, the red luminance sensor 7r, the green luminance sensor 7g and the blue luminance sensor 7b. The measuring results or acquired detected values are inputted to the microcomputer 4 and are stored as data and subjected to arithmetic operations as needed. The value detected by the white luminance sensor 7w, the value detected by the red luminance sensor 7r, the value detected by the green luminance sensor 7g and the value detected by the blue luminance sensor 7b are respectively denoted by ADws, ADrs, ADgs and ADbs with "s" suffixed to indicate that the values are measurements taken at the second point of time.

Step 4 (S4): A ratio of the luminance of each of the plural colors to the luminance of white light is acquired as a second color luminance component ratio by using the luminance of white light and the luminance of each of the plural colors both acquired at S3. That is, as the luminance is substituted by the detected value, the second color luminance component ratio As (the suffix "s" indicating the value having been detected at the second point of time) is acquired from the following equations. The second color luminance component ratio As for R is acquired as a second red luminance component ratio Asr = ADrs/ADws, the second color luminance component ratio As for G is acquired as a second green luminance component ratio Asg = ADgs/ADws, and the second color luminance component ratio As for B is acquired as a second blue luminance component ratio Asb = ADbs/ADws. This calculation is adequately executed by the microcomputer 4 as the first arithmetic operation means.

Step 5 (S5): The state of a change (normally a reducing state) in color luminance component ratio between the first and the second points of time, i.e., a rate of change in color luminance component is acquired from the difference between the first color luminance component ratio Af and the second color luminance component ratio As. The rate of change in color luminance component X is acquired from the following equations using the first color luminance component ratio Af and the second color luminance component ratio As. The rate of change in color luminance component X for R is acquired as a rate of change in red luminance component Xr = (Afr-Asr)/Afr, the rate of change in color luminance component X for G is acquired as a rate of change in green luminance component Xg = (Afg-Asg)/Afg, and the rate of change in color luminance component X for B is acquired as a rate of change in blue luminance component Xb = (Afb-Asb)/Afb. As the difference between the first color luminance component ratio Af and the second color luminance component ratio As is divided by the first color luminance component ratio Af, the rate of change in color luminance component can be acquired very accurately. This calculation is adequately executed by the microcomputer 4 as the first arithmetic operation means.

As a change in color luminance component ratio (a rate of change in color luminance component) is found at S5, an aging change of the LCD device after the first point of time up to the second point of time can be found out. It is therefore possible to easily adjust the liquid crystal drive circuit 5 and the backlight drive circuit 6 according to the aging change. An example of the adjustment process will be described in the following description for Steps 6-10.

Step 6 (S6): For each of the plural colors, a gain correction coefficient needed to correct the gain value is acquired using the rate of change in color luminance component. That is, a gain correction coefficient Ccn (gain correction coefficient Cr for R, gain correction coefficient Cg for G, or gain correction coefficient Cb for B) for correcting the gain value Gs (gain value Gsr, Gsg or Gsb) is acquired from the following equations by using the rate of change in color luminance component X (rate of change in color luminance component Xr, Xg or Xb for R, G or B). In the following example, the resolution of the corrected gain value is 10 bits (1024 gray scales: gray scale 0 to gray scale 1023) as a specific value. The gain correction coefficient Cr for R is acquired as Cr = (1-Xr) x 1023, the gain correction coefficient Cg for G is acquired as Cg = (1-Xg) x 1023, and the gain correction coefficient Cb for B is acquired as Cb = (1-Xb) x 1023. This calculation is adequately executed by the microcomputer 4 as the first arithmetic operation means. The gain correction coefficient Ccn is adequately stored in the memory section in the microcomputer 4 as a constant. Therefore, the microcomputer 4 also serves as gain correction coefficient setting means.

Step 7 (S7): For each of the plural colors, the liquid crystal drive output signal is generated by using the corrected gain value obtained by correcting the gain value with the gain correction coefficient. Specifically, the LCD panel 2 is driven with the liquid crystal drive output signal Spd (Spr, Spg or Spb) which is generated by using the corrected gain value Gc (corrected gain value Gcr = Gsr x Cr for R, corrected gain value Gcg = Gsg x Cg for G or corrected gain value Gcb = Gsb x Cb for B) acquired by multiplying the gain value Gs (Gsr, Gsg or Gsb) by the gain correction coefficient Ccn (Cr, Cg or Cb) for each of R, G and B. As the gain value Gs is corrected with the gain correction coefficient Ccn, fluctuation in the color luminance for each of R, G and B can be compensated for. As the corrected gain value Gc is acquired by multiplication, a simple arithmetic operation, control can be done accurately. When the multiplication is carried out by the microcomputer 4, the microcomputer 4 also serves as multiplication means.

Because the corrected gain value Gc acquired by multiplying the gain value Gs by the gain correction coefficient Ccn has a lower level than the gain value Gs, the level of the gain value (corrected gain value Gc) to be inputted to the liquid crystal drive circuit 5 as liquid crystal drive means becomes lower than the one before correction, but the relative value (relative ratio) of the luminances among R, G and B or the white balance can be returned to the initial state (e.g., the state of the first point of time). As the level of the corrected gain value Gc to be inputted to the liquid crystal drive circuit 5 declines, the level of the liquid crystal drive output signal Spd outputted from the liquid crystal drive circuit 5 declines accordingly. This results in a decrease in the backlight luminance (transmitted light) transmitted through the LCD panel 2. However, the luminance can be adjusted more easily than the white balance, so that the display state (the white balance and the luminance) can be returned to the initial state easily.

Step 8 (S8): A rate of change in transmitted light luminance is acquired to compensate for a decrease in the luminance of the transmitted light caused by correction of the gain value Gs. That is, a change in transmitted light luminance is computed as a rate of change in transmitted light luminance dYw using the rate of change in color luminance component X. The rates of change in color luminance component X (Xr, Xg and Xb) are multiplied by contribution factors K (contribution factor Kr of R, contribution factor Kg of G and contribution factor Kb of B) of (the rate of change in red luminance component Xr, the rate of change in green luminance component Xg and rate of change in blue luminance component Xb of) the individual colors R, G and B contained in the backlight (transmitted light) transmitted through the LCD panel 2 to the transmitted light luminance to thereby acquire individual rates of change in color luminance dY (the rate of change in color luminance of R or the rate of change in red luminance dYr = Xr x Kr, the rate of change in color luminance of G or the rate of change in green luminance dYg = Xg x Kg, and the rate of change in color luminance of B or the rate of change in blue luminance dYb = Xb x Kb), and the individual rates of change in color luminance dY (dYr, dYg and dYb) are added together to compute the rate of change in transmitted light luminance dYw (dYw = dY = dYr + dYg + dYb). Being the three primary colors, the individual colors R, G and B are called "color components". That is, the contribution factor K is the contribution factor of each color component contained in the backlight (i.e., transmitted light) transmitted through the LCD panel 2 to the transmitted light luminance.

The contribution factor is a value acquired beforehand empirically as in a life test or so. This value, if made externally settable, can also be used even when the specifications of the characteristics of the backlight unit 3 are changed. The value may be stored in advance in the microcomputer 4 or may be inputted when the computer program which executes the aging compensation method is activated. The arithmetic operations to obtain the rate of change in transmitted light luminance is adequately executed by the microcomputer 4 as the second arithmetic operation means. Although the first arithmetic operation means and the second arithmetic operation means are described as separate operation means for the sake of convenience, actually, those arithmetic operations are carried out in the microcomputer 4 using the same function.

Step 9 (S9): A target luminance is acquired from the rate of change in transmitted light luminance. Specifically, a target luminance Z is acquired as Z = Zm + Zm x dYw using the white luminance (backlight luminance) Zm (Zm being the luminance corresponding to the detected value ADws of the white luminance sensor 7w) and the rate of change in transmitted light luminance dYw, both measured at the second point of time. This calculation is adequately executed by the microcomputer 4 as the second arithmetic operation means.

Step 10 (S10): The backlight drive signal is controlled to ensure the target luminance. Specifically, the microcomputer 4 adjusts the light modulation signal Sbc in such a way that the white luminance (backlight luminance) becomes the target luminance Z, and the backlight drive circuit 6 which is the backlight drive means controls the backlight drive signal Sbd according to the light modulation signal Sbc. This control can compensate for a decrease in transmitted light luminance caused by correction of the gain value Gs.

In the above-mentioned example, the rate of change in color luminance component is acquired from the first color luminance component ratio Af and the second color luminance component ratio As which are luminance ratios of individual colors to the luminance of white light (backlight). However, the rate of change in color luminance component may be acquired as follows by using individual detected values of red luminance sensor, green luminance sensor and blue luminance sonsor.

Previously, during manufacturing process in a factory, luminance adjustment is performed so that the detected value ADw of the white luminance sensor 7w becomes a predetermined value ADw1, and the detected value ADr1 of the red luminance sensor 7r, the detected value ADg1 of the green luminance sensor 7g and the detected value ADb1 of the blue luminance sensor 7b at that time are respectively stored into a memory (not shown) in the microcomputer 4 as standard detection values of individual color luminance sensors. In this way, the detected values of individual color luminance sensors at the initial state of the backlight unit 3 are previously obtained.

When an user actually uses the LCD device 1 and wants to compensate for its display characteristics, the following process is carried out. Luminance adjustment is performed so that the detected value ADw of the white luminance sensor 7w becomes the predetermined value ADw1, and the detected value ADr2 of the red luminance sensor 7r, the detected value ADg2 of the green luminance sensor 7g and the detected value ADb2 of the blue luminance sonsor 7b at that time are obtained. Based on these detected values of individual color luminance sensors and the detected values of individual color luminance sensors which have been stored in the memory in the microcomputer 4 during the manufacturing process (at the initial state), the rate of change in color luminance component X is calculated according to the following equations. The rate of change in color luminance component XR for red is calculated as XR=(ADr1-ADr2)/ADr1, the rate of change in color luminance component XG for green is calculated as XG=(ADg1-ADg2)/ADg1, and the rate of change in color luminance XB for blue is calculated as XB=(ADb1-ADb2)/ADb1.

A gain correction coefficient needed to correct the gain value is acquired by using the rate of change in color luminance component (XR, XG or XB) calculated in this way, a liquid crystal drive signal is generated by using the corrected gain value obtained by correcting the gain value with the acquired gain correction coefficient. This process is the same as that in the above-mentioned example, so the explanation thereof is omitted.

In the above-mentioned example, the rate of change in transmitted light luminance is acquired by multiplying the rate of change in color luminance component by the contribution factor to the luminance of color contained in the backlight transmitted through the LCD panel 2. However, this is one example, and so long as the rate of change in color luminance component and the contribution factor to the luminance are used, the rate of change in transmitted light luminance may be acquired by another calculation method.

### (Second Embodiment)

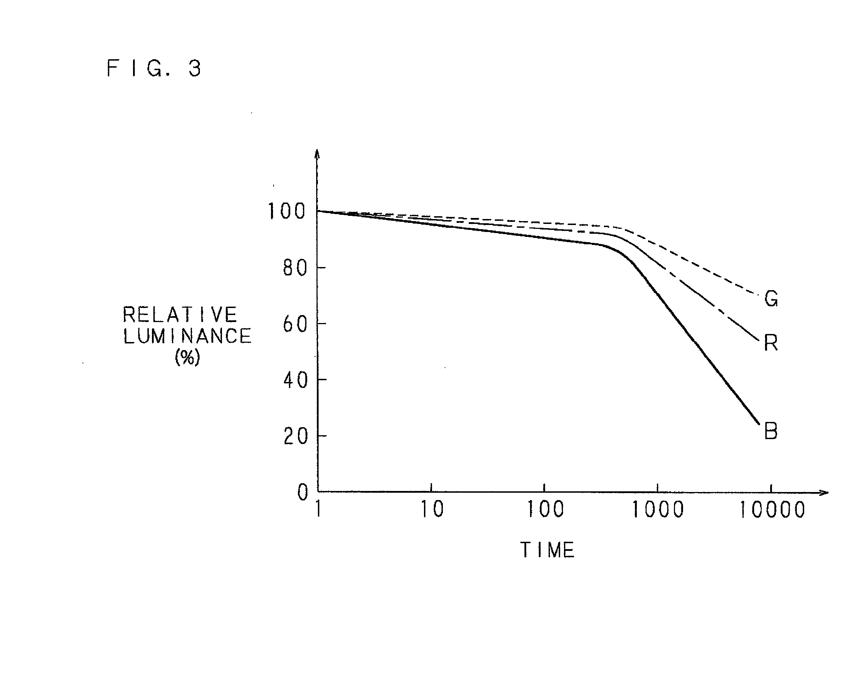

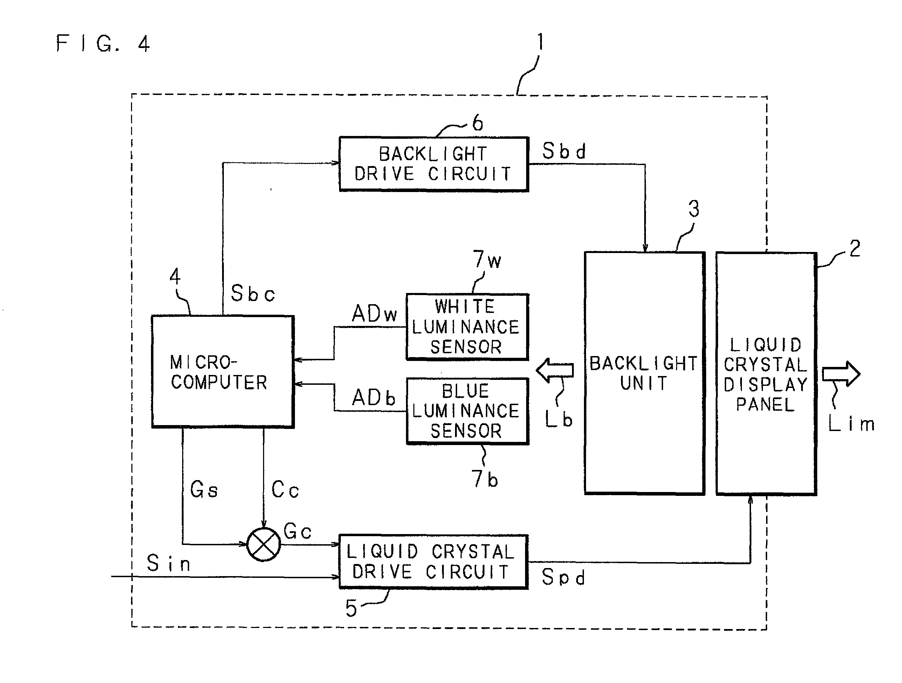

FIG. 3 is a graph showing aging changes in luminance of the individual color components of a backlight unit similar to the one to be used in a liquid crystal display device according to the second embodiment of the invention. In the graph, the horizontal axis indicates the time while the vertical axis indicates the relative luminance with the initial luminance taken as 100%. The characteristic curve with the letter "R" indicates the luminance of the red component (R luminance) of the backlight unit 3 (see FIG. 4), the characteristic curve with the letter "G" likewise indicates the luminance of the green component (G luminance), and the characteristic curve with the letter "B" likewise indicates the luminance of the blue component (B luminance). Although a change (decrease) in luminance is small for 800 hours or so, for example, the luminance rapidly deareases after a lapse of 1,000 hours, and after a lapse of 10,000 hours, the R luminance decreases to about 50% of the initial luminance, the G luminance decreases to about 70% of the initial luminance, and the B luminance decreases to about 30% of the initial luminance. In other words, significant aging change is shown. It is apparent that the decrease in B luminance is the greatest due to the yellowing of the components (guide plate and polarizer) due to the ultraviolet rays from the backlight unit 3 and the degradation of the cathode ray tube itself.

The present inventor confirmed that the degree of the change in luminance held a given rate among R, G and B. In other words, if the luminance of one color selected is measured, the state of the change in luminance (luminance decrease) for the other colors can be grasped (computed) by using the rates (relative ratios) for the other colors without measuring changes in luminance of all of R, G and B. The second embodiment employs such characteristics of the backlight unit 3 (e.g., the aging characteristics of the cathode ray tube). It is needless to say that the backlight unit 3 is not limited to a cathode ray tube as long as it has a given relationship among R, G and B.

FIG. 4 is a block diagram of schematic circuit blocks of a liquid crystal display device for explaining a light modulation method in the liquid crystal display device according to the second embodiment of the invention. As the second embodiment is the same as the first embodiment in the basic structure, same reference numerals are given to those components which are the same as the corresponding components of the first embodiment to thereby avoid repeating their detailed descriptions. The second embodiment differs from the first embodiment in that as the luminance sensors, only the blue luminance sensor 7b is used as a color luminance sensor in addition to the white luminance sensor 7w. Of course, the other color luminance sensor (e.g., the red luminance sensor 7r or the green luminance sensor 7g) may be selected in place of the blue luminance sensor 7b. Use of a single color luminance sensor can simplify the structure, and can thus simplify the mounting process, leading to a reduction in costs. For the other colors R and G than B, their luminances or necessary values should be computed by preforming adequate arithmetic operations.

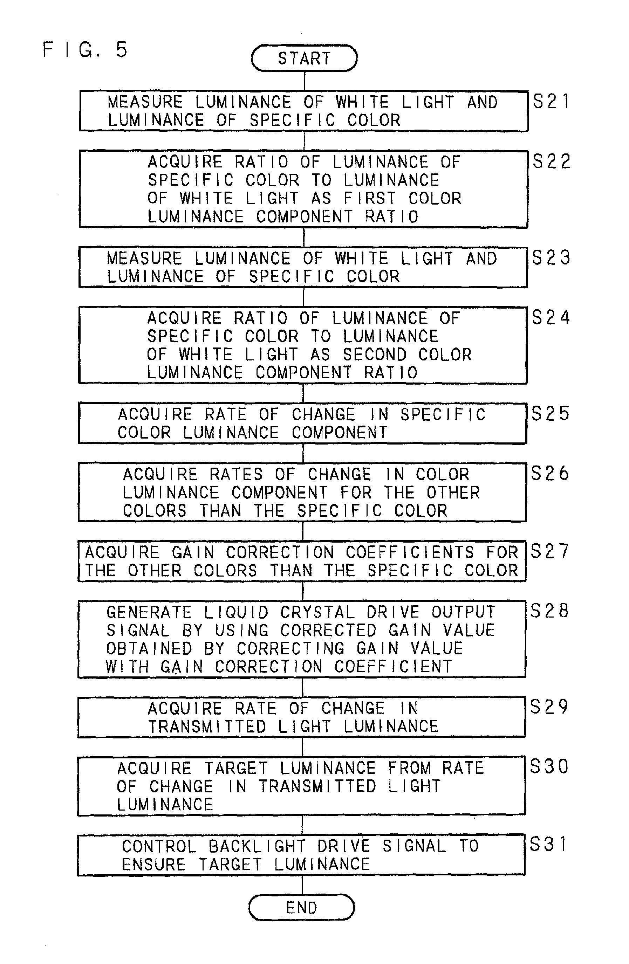

FIG. 5 is a flowchart illustrating processes of an aging compensation method for the liquid crystal display device according to the second embodiment of the invention. The LCD device will be explained as one illustrated in FIG. 4 by using terms and reference symbols shown in FIG. 4. The basic flow according to the embodiment is the same as that of the first embodiment, and the descriptions of those portions which are identical to the corresponding portions of the flowchart in FIG. 2 will be omitted as needed.

Step 21 (S21): At the first point of time, a luminance of white light and a luminance of a specific color are measured. This step is basically similar to Step 1. The difference lies in that besides the luminance of white light, the luminance of the selected one color (specific color; for example, blue (B)) alone is measured. As in Step 1, the value detected by the white luminance sensor 7w is ADwf, and the value detected by the blue luminance sensor 7b is ADbf. As B, which shows the greatest aging change, is selected as a specific color, the characteristic reference becomes clear and arithmetic operations or so can be simplified, so that arithmetic operation errors can be reduced.

Step 22 (S22): A ratio of the luminance of the specific color to the luminance of white light is acquired as a first color luminance component ratio by using the luminance of white light and the luminance of the specific color both acquired at S21. The first color luminance component ratio Af for B is acquired as a first blue luminance component ratio Afb = ADbf/ADwf, as done at Step 2.

Step 23 (S23): At the second point of time later than the first point of time, the luminance of white light and the luminance of the specific color are measured. This step is basically similar to step 21. The detected value by the white luminance sensor 7w is ADws and the detected value by the blue luminance sensor 7b is ADbs, as done at Step 3.

Step 24 (S24): A ratio of the luminance of the specific color to the luminance of white light is acquired as a second color luminance component ratio by using the luminance of white light and the luminance of the specific color both acquired at S23. The second color luminance component ratio As for B is acquired as a second red luminance component ratio Asb = ADbs/ADws as done at Step 4.

Step 25 (S25): The state of a change (normally a reducing state) in color luminance component ratio between the first and the second points of time for the specific color, i.e., a rate of change in the specific color luminance component is acquired from the difference between the first color luminance component ratio Af and the second color luminance component ratio As. The rate of change in color luminance component X for B is acquired as a rate of change in blue luminance component Xb = (Afb-Asb)/Afb as done at Step 5.

Step 26 (S26): Rates of change in color luminance component for the other colors than the specific color (red (R) and green (G)) are acquired. Given that the ratio of the rate of change in red luminance component Xr to the rate of change in blue luminance component Xb is Qr, and the ratio of the rate of change in green luminance component Xg to the rate of change in blue luminance component Xb is Qg, the rate of change in red luminance component Xr is acquired as Xr = Xb x Qr and the rate of change in green luminance component Xg is acquired as Xg = Xb x Qg. The ratios Qr and Qg can be measured beforehand in a life test or so. In the life test conducted by the present inventor, Qr was, for example, 0.76 and Qg was, for example, 0.56. That is, Xr = 0.76Xb and Xg = 0.56Xb. With the use of the ratio Q, the rate of change in color luminance component of a color other than the specific color can be acquired by merely measuring a change in luminance of the specific color.

Step 27 (S27): Gain correction coefficients for the other colors (R and G) than the specific color are acquired. The gain correction coefficients Ccn (the gain correction coefficient Cr for R, and the gain correction coefficient Cg for G) are acquired from the following equations. In the following example, the resolution of the corrected gain value is 10 bits (1024 gray scales: gray scale 0 to gray scale 1023) as a specific value. As done at Step 6, the gain correction coefficient Cr for R is acquired as Cr = (1-Xr) x 1023, and the gain correction coefficient Cg for G is acquired as Cg = (1-Xg) x 1023.

Step 28 (S28): The liquid crystal drive output signals are generated by using the corrected gain values obtained by correcting the gain values with the gain correction coefficients. As done at Step 7, the LCD panel 2 is driven with the liquid crystal drive output signal Spd (Spr or Spg) which is generated by using the corrected gain value Gc (corrected gain value Gcr = Gsr x Cr for R, or corrected gain value Gcg = Gsg x Cg for G) acquired by multiplying the gain value Gs (Gsr or Gsg) by the gain correction coefficient Ccn (Cr or Cg). As the gain value Gs is corrected with the gain correction coefficient Ccn, fluctuation in the color luminance for each of R and G can be compensated for. Because the corrected gain value Gc acquired by multiplying the gain value Gs by the gain correction coefficient Ccn has a lower level than the gain value Gs, the level of the gain value (corrected gain value Gc) to be inputted to the liquid crystal drive circuit 5 as liquid crystal drive means becomes lower than the one before correction, but the relative value (relative ratio) of the luminances among R, G and B or the white balance is returned to the initial state (e.g., the state of the first point of time). As the level of the corrected gain value Gc to be inputted to the liquid crystal drive circuit 5 declines, the level of the liquid crystal drive output signal Spd outputted from the liquid crystal drive circuit 5 declines accordingly. As a result, the luminance of the transmitted light transmitted through the LCD panel 2 decreases.

Step 29 (S29): A rate of change in transmitted light luminance is acquired to compensate for a decrease in transmitted light luminance caused by correction of the gain value Gs. This step is basically similar to Step 8. The rates of change in color luminance component X (Xr and Xg) are multiplied by contribution factors K (contribution factor Kr for R, and contribution factor Kg for G) of (rate of change in red luminance component Xr and the rate of change in green luminance component Xg of) the individual colors R and G other than the specific color B to the transmitted light luminance to thereby acquire individual rates of change in color luminance dY of R and G (the rate of change in color luminance of R or the rate of change in red luminance dYr = Xr x Kr, and the rate of change in color luminance of G or the rate of change in green luminance dYg = Xg x Kg), and the individual rates of change in color luminance dY (dYr and dYg) are added together to compute the rate of change in transmitted light luminance dYw (dYw = dYr + dYg).

Step 30 (S30): A target luminance is acquired from the rate of change in transmitted light luminance. This step is basically similar to Step 9, and the target luminance Z is acquired as Z = Zm + Zm x dYw.

Step 31 (S31): The backlight drive signal is controlled to ensure the target luminance. This step is basically similar to Step 10.

In the second embodiment, same as in the first embodiment, the method of acquiring the rate of change in color luminance component and/or the method of acquiring the rate of change in transmitted light luminance are not restricted to the above-mentioned example.

## Claims

1. An aging compensation method for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising:
a first process in which at two different points of time, a backlight luminance and a luminance of at least one color in the plural colors contained in the backlight are measured;
a second process in which a rate of change in color luminance component for the at least one color is acquired from the luminance values measured at the two different points of time;
a third process in which a gain correction coefficient for the at least one color for correcting the gain value is acquired from the rate of change in color luminance component; and
a fourth process in which the liquid crystal drive output signal for the at least one color is generated by using a corrected gain value acquired by correcting the gain value with the gain correction coefficient.

2. The aging compensation method according to claim 1, wherein a ratio of the luminance of the at least one color to the backlight luminance is acquired at the different points of time as a first color luminance component ratio and a second color luminance component ratio, and the rate of change in color luminance component is acquired from a difference between the first color luminance component ratio and the second color luminance component ratio.

3. The aging compensation method according to claim 1 or 2, further comprising:
a fifth process in which a rate of change in transmitted light luminance is acquired from the rate of change in color luminance component and a contribution factor of a color contained in the backlight having transmitted through the liquid crystal display panel to the backlight luminance;
a sixth process in which a target luminance of the backlight is acquired from the rate of change in transmitted light luminance; and
a seventh process in which a backlight drive signal is controlled in such a way that the backlight luminance becomes the target luminance.

4. The aging compensation method according to claim 3, wherein the rate of change in transmitted light luminance is acquired by multiplying the rate of change in color luminance component by the contribution factor of a color contained in the backlight having transmitted through the liquid crystal display panel to the backlight luminance.

5. An aging compensation method for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising:
a first process in which at two different points of time, a backlight luminance and a luminance of each of the plural colors contained in the backlight are measured;
a second process in which a rate of change in color luminance component for each of the plural colors is acquired from the luminance values measured at the two different points of time;
a third process in which a gain correction coefficient for each of the plural colors for correcting said gain value is acquired from the rate of change in color luminance component; and
a fourth process in which the liquid crystal drive output signal for each of the plural colors is generated by using a corrected gain value acquired by correcting the gain value with the gain correction coefficient.

6. The aging compensation method according to claim 5, wherein a ratio of the luminance of each of the plural colors to the backlight luminance is acquired at the different points of time as a first color luminance component ratio and a second color luminance component ratio, and the rate of change in color luminance component is acquired from a difference between the first color luminance component ratio and the second color luminance component ratio for each of the plural colors.

7. The aging compensation method according to claim 6, wherein the rate of change in color luminance component is computed by dividing the difference between the first color luminance component ratio and the second color luminance component ratio by the first color luminance component ratio.

8. The aging compensation method according to any one of claims 5 through 7, wherein the gain value is corrected by multiplying the gain value by the gain correction coefficient.

9. The aging compensation method according to any one of claims 5 through 8, further comprising:
a fifth process in which a rate of change in transmitted light luminance is acquired from the rate of change in color luminance component and a contribution factor of a color contained in the backlight having transmitted through the liquid crystal display panel to the backlight luminance for each of the plural colors;
a sixth process in which a target luminance of the backlight is acquired from the rate of change in transmitted light luminance; and
a seventh process in which a backlight drive signal is controlled in such a way that the backlight luminance becomes the target luminance.

10. The aging compensation method according to claim 9, wherein a rate of change in color luminance is acquired by multiplying the rate of change in color luminance component by the contribution factor of a color contained in the backlight having transmitted through the liquid crystal display panel to the backlight luminance for each of the plural colors, and the rate of change in transmitted light luminance is acquired from a sum of those rates of change in color luminance.

11. The aging compensation method according to claim 9 or 10, wherein the contribution factor can be set.

12. An aging compensation method for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising:
a first process in which at two different points of time, a backlight luminance and a luminance of one color selected from the plural colors contained in the backlight are measured;
a second process in which a rate of change in color luminance component for the one color is acquired from the luminance values measured at the two different points of time;
a third process in which a rate of change in color luminance component for each of the other colors in the plural colors is acquired by applying a rate acquired beforehand to the rate of change in color luminance component for the one color;
a fourth process in which a gain correction coefficient for each of the other colors than the one color for correcting the gain value is acquired from the rate of change in color luminance component; and
a fifth process in which the liquid crystal drive output signal for each of the other colors than the one color is generated by using a corrected gain value acquired by correcting the gain value with the gain correction coefficient.

13. The aging compensation method according to claim 12, wherein a ratio of the luminance of the one color to the backlight luminance is acquired at the different points of time as a first color luminance component ratio and a second color luminance component ratio, and the rate of change in color luminance component for the one color is acquired from a difference between the first color luminance component ratio and the second color luminance component ratio.

14. The aging compensation method according to claim 13, wherein the rate of change in color luminance component for the one color is computed by dividing the difference between the first color luminance component ratio and the second color luminance component ratio by the first color luminance component ratio.

15. The aging compensation method according to any one of claims 12 through 14, wherein the one color has a greatest aging change among the plural colors.

16. The aging compensation method according to any one of claims 12 through 15, wherein the rate of change in color luminance component is computed by multiplying the rate of change in color luminance component for the one color by the rate acquired beforehand.

17. The aging compensation method according to any one of claims 12 through 16, wherein the gain value is corrected by multiplying the gain value by the gain correction coefficient.

18. The aging compensation method according to any one of claims 12 through 17, further comprising:
a sixth process in which a rate of change in transmitted light luminance is acquired from the rate of change in color luminance component and a contribution factor of a color contained in the backlight having transmitted through the liquid crystal display panel to the backlight luminance for each of the other colors than the one color;
a seventh process in which a target luminance of the backlight is acquired from the rate of change in transmitted light luminance; and
an eighth process in which a backlight drive signal is controlled in such a way that the backlight luminance becomes the target luminance.

19. The aging compensation method according to claim 18, wherein a rate of change in color luminance is acquired by multiplying the rate of change in color luminance component by the contribution factor of a color contained in the backlight having transmitted through the liquid crystal display panel to the backlight luminance for each of the other colors than the one color, and the rate of change in transmitted light luminance is acquired from a sum of those rates of change in color luminance.

20. The aging compensation method according to claim 18 or 19, wherein the contribution factor can be set.

21. An aging compensation apparatus for a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising:
a luminance sensor which measures a backlight luminance;
a color luminance sensor which measures a luminance of at least one color in the plural colors contained in the backlight;
first arithmetic operation means for acquiring a rate of change in color luminance component for the at least one color from the luminance values measured at two different points of time and acquiring a gain correction coefficient for the at least one color for correcting the gain value from the rate of change in color luminance component; and
liquid crystal drive means for generating the liquid crystal drive output signal for the at least one color by using a corrected gain value acquired by correcting the gain value with the gain correction coefficient.

22. The aging compensation apparatus according to claim 21, wherein a ratio of the luminance of the at least one color to the backlight luminance is acquired as a color luminance component ratio from the backlight luminance and the luminance of the at least one color, and the rate of change in color luminance component is acquired from a difference between a first color luminance component ratio at a first point of time and a second color luminance component ratio at a second point of time later than the first point of time.

23. The aging compensation apparatus according to claim 21 or 22, further comprising:
second arithmetic operation means for acquiring a rate of change in ransmitted light luminance from the rate of change in color luminance component and a contribution factor of a color contained in the backlight having transmitted through the liquid crystal display panel to the backlight luminance, and acquiring a target luminance of the backlight from the rate of change in transmitted light luminance; and
backlight drive means for controlling a backlight drive signal in such a way that the backlight luminance becomes the target luminance.

24. The aging compensation apparatus according to claim 23, wherein the rate of change in transmitted light luminance is acquired by multiplying the rate of change in color luminance component by the contribution factor of a color contained in the backlight having transmitted through the liquid crystal display panel to the backlight luminance.

25. A computer program for allowing a computer to execute compensation for aging of a liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising:
a first process in which at two different points of time, the computer is allowed to measure a backlight luminance and a luminance of at least one color in the plural colors contained in the backlight;
a second process in which the computer is allowed to acquire a rate of change in color luminance component for the at least one color from the luminance values measured at the two different points of time;
a third process in which the computer is allowed to acquire a gain correction coefficient for the at least one color for correcting the gain value from the rate of change in color luminance component; and
a fourth process in which the computer is allowed to generate the liquid crystal drive output signal for the at least one color by using a corrected gain value acquired by correcting the gain value with the gain correction coefficient.

26. The computer program according to claim 25, wherein a ratio of the luminance of the at least one color to the backlight luminance is acquired at the different points of time as a first color luminance component ratio and a second color luminance component ratio, and the rate of change in color luminance component is acquired from a difference between the first color luminance component ratio and the second color luminance component ratio.

27. The computer program according to claim 25 or 26, further comprising:
a fifth process in which the computer is allowed to acquire a rate of change in transmitted light luminance from the rate of change in color luminance component and a contribution factor of a color contained in the backlight having transmitted through the liquid crystal display panel to the backlight luminance;
a sixth process in which the computer is allowed to acquire a target luminance of the backlight from the rate of change in transmitted light luminance; and
a seventh process in which the computer is allowed to control a backlight drive signal in such a way that the backlight luminance becomes the target luminance.

28. The computer program according to claim 27, wherein the rate of change in transmitted light luminance is acquired by multiplying the rate of change in color luminance component by the contribution factor of a color contained in the backlight having transmitted through the liquid crystal display panel to the backlight luminance.

29. A liquid crystal display device, which has a liquid crystal display panel, and a backlight unit for generating backlight to illuminate a rear side of the liquid crystal display panel, and achieves color display by driving the liquid crystal display panel with liquid crystal drive output signals generated based on image input signals corresponding to plural colors and a gain value set, comprising:
a luminance sensor which measures a backlight luminance;
a color luminance sensor which measures a luminance of at least one color in the plural colors contained in the backlight;
first arithmetic operation means for acquiring a rate of change in color luminance component for the at least one color from the luminance values measured at two different points of time and acquiring a gain correction coefficient for the at least one color for correcting the gain value from the rate of change in color luminance component; and
liquid crystal drive means for generating the liquid crystal drive output signal for the at least one color by using a corrected gain value acquired by correcting the gain value with the gain correction coefficient.

30. The liquid crystal display device according to claim 29, wherein a ratio of the luminance of the at least one color to the backlight luminance is acquired as a color luminance component ratio from the backlight luminance and the luminance of the at least one color, and the rate of change in color luminance component is acquired from a difference between a first color luminance component ratio at a first point of time and a second color luminance component ratio at a second point of time later than the first point of time.

31. The liquid crystal display device according to claim 29 or 30, further comprising:
second arithmetic operation means for acquiring a rate of change in transmitted light luminance from the rate of change in color luminance component and a contribution factor of a color contained in the backlight having transmitted through the liquid crystal display panel to the backlight luminance, and acquiring a target luminance of the backlight from the rate of change in transmitted light luminance; and
backlight drive means for controlling a backlight drive signal in such a way that the backlight luminance becomes the target luminance.

32. The liquid crystal display device according to claim 31, wherein the rate of change in transmitted light luminance is acquired by multiplying the rate of change in color luminance component by the contribution factor of a color contained in the backlight having transmitted through the liquid crystal display panel to the backlight luminance.
